# EUROPÄISCHE PATENTSCHRIFT

(11) **EP 2 147 773 B1**
(45) Veröffentlichungstag und Bekanntmachung des Hinweises auf die Patenterteilung: **14.12.2011**
(21) Anmeldenummer: 09164768.5
(22) Anmeldetag: 07.07.2009
(51) Int. Cl.: B29C 63/04

(54) **Beschichtete dekorative Trägerplatte (DPL) mit Biegekante und Verfahren zur Herstellung der beschichteten Trägerplatte**
Coated decorative carrier plate (DPL) with bending edge and method of manufacturing the coated mounting plate
Plaque de support décorative revêtue (DPL) dotée d'un bord de pliage et procédé de fabrication de la plaque de support revêtue

(30) Priorität: 22.07.2008 DE 102008034828
(43) Veröffentlichungstag der Anmeldung: 27.01.2010
(73) Patentinhaber: Flooring Technologies Ltd., Pieta PTA 9044 (MT)
(72) Erfinder:
(74) Vertreter: Morawski, Birgit

(56) Entgegenhaltungen:
- EP-A1- 1 880 838
- DE-C1- 19 830 778
- JP-A- 2004 358 873
- US-A1- 2006 179 773

## Beschreibung

Die Erfindung betrifft mit Dekorpapieren direkt beschichtete Trägerplatten (direct pressure laminate, DPL) aus Holzwerkstoffen mit warm nachverformbaren Postformingkanten mit kleineren Biegeradien und ein Verfahren zur Herstellung solcher beschichteter Holzwerkstoffplatten.

Holzwerkstoffplatten mit verformten Kanten sind bekannt.

So werden in der US 2006/0179773 A1 Bodenplatten beschrieben, die abgerundete Kanten aufweisen, welche durch ein Zusammenpressen des Kernbereiches der Bodenplatte bestehend aus Holzfaserplatten hergestellt werden.

Aus dem Stand der Technik sind direkt beschichtete Holzwerkstoffplatten mit üblichen Postformingkanten bekannt. Dabei werden die Holzwerkstoffplatten als Trägerplatten im DPL - Kurztaktverfahren auf der Oberseite mit Aminoplasten imprägnierten Papieren beschichtet. Auf der Unterseite werden gegebenenfalls balance layer vorgesehen. Bei den im DPL - Kurztaktverfahren angewendeten Drucken und Temperaturen vernetzen die Harze in den imprägnierten Papieren. Die Beschichtung kann aus mehreren Papieren bestehen, wobei die oberste Schicht vorzugsweise aus einem Papier ohne Pigmentzugabe besteht, das eine kratzfeste und hochglänzende Oberflächenschicht bildet. Ebenso ist es möglich, dass das bedruckte Papier nur mit einer Melaminharzschicht geschützt ist. Die darunter angeordnete Papierschicht ist in der Masse beliebig gefärbt oder mit einem Vielfarbenaufdruck versehen. In einer anderen Ausgestaltung kann auf die erste Schicht verzichtet werden, wobei die Dekorschicht durch entsprechende Zusätze die Aufgaben der sonst üblichen Oberschicht übernimmt. Unterhalb der Dekorpapiere können zusätzlich mit Harzen getränkte Barriere-Papiere vorgesehen sein.

Beim Postforming-Verfalzren wird nun an der Kante zwischen einer schmalen Seite und mindestens einer Deckseite der Trägerplatte nachträglich, das heißt nach dem Belegen und Verpressen, die noch nicht vollständig vernetzte Beschichtung so bearbeitet, dass sie einen Radius bildet. Dazu wird die Trägerplatte von der Unterseite in Richtung der Beschichtung an der Kante zur Schmalseite durch Werkzeuge im Durchlauf zerspanend soweit abgetragen, dass die Beschichtung und ein dünner Teil der Trägerplatte als Überstand stehen bleibt und gleichzeitig die Trägerplatte in diesem Bereich die gewünschte abgerundete Kantenform erhält. Aus der EP 1 880 838 A1 ist z.B. bekannt, die Ecken bzw. Kanten von Platten abzutragen, wobei gleichzeitig ein Bereich eines Beschichtungsmateriales abgetragen wird. Nach der Beleimung wird der Überstand erhitzt, um den Radius der Trägerplatte gebogen und während einer kurzen Zeit an die Kante gepresst, bis der thermoplastische Kleber genügend abgekühlt ist. Als Kleber werden PUR-, EVA-, Polyamid-, Polyolefine- oder TPU-Kleber verwendet.

Die nachträgliche Verformbarkeit der Beschichtung wird dadurch erreicht, dass die Beschichtung einen definierten Vernetzungsgrad erreicht, der die nachträgliche Biegung ermöglicht, die eingesetzten Barrierepapiere thermoplastische Eigenschaften besitzen und der Überstand der Deckschicht einschließlich der verbliebenen Holzwerkstoffschicht eine Dicke von 0,4 bis 0,5 mm besitzt.

Mit den DPL-Trägerplatten aus Holzwerkstoffen und PostformingKanten können diese zum Ausbilden abgerundete Kanten, wie es vielfach bei Möbelbauteilen und Paneelen gefordert wird zwar warm nachverformt werden, jedoch nur mit Biegeradien von 6 mm und größer. Diese relativ großen abgerundeten Kanten werden als nachteilig empfunden. Darüber hinaus führen sie beim Aneinanderfügen von zwei beschichteten Trägerplatten mit entsprechend abgerundeten Kanten zu sehr großen Sichtfugen. Solche großen Sichtfugen sind optisch störend, sind zudem Schmutzfänger und verringern die aktive ebene Benutzerfläche.

Der Erfindung liegt die Aufgabe zugrunde, bei im DPL-Verfahren beschichteten Holzwerkstoffplatten mit Postformingkanten die abgerundeten Kanten mit Biegeradien von 1,5 bis 6 mm zu schaffen, ohne dass die Funktionstüchtigkeit und Qualität im Biegebereich leidet und Hochglanz und Kratzfestigkeit erhalten bleiben.

Erfindungsgemäß wird die Aufgabe bei im DPL-Verfahren beschichteten Holzwerkstoffplatten durch das Verfahren gemäβ Anspruch 1 und die Trägerplatte gemäβ Anspruch 4 gelöst_{.}

Beim erfindungsgemäßen Verfahren wird im Postforming-verfahren die Trägerplatte mit den üblichen Papieren, die mit MelaminFormaldehyd-Harzen imprägniert sind, beschichtet. Dabei wird die Beschichtung mit der Oberseite der Trägerplatte fest verbunden. Die Parameter hinsichtlich Druck und Temperatur während der Beschichtung werden so geführt, dass ein definierter Vernetzungsgrad erreicht wird, der eine nachträgliche Formung der Beschichtung noch zulässt. Die so erhaltene beschichtete Platte wird nun an der/den Kante/n einer oder beider Schmalseite/n und der Deckseite von der Unterseite mit Fräswerkzeugen in der gewünschten Breite soweit abgetragen, dass ein Überstand, im nachfolgenden als Lappen bezeichnet, aus Beschichtungsmaterial mit Resten der Holzwerkstoffschicht stehen bleibt. Vorzugsweise wird die Breite des überstehenden Lappens so gewählt, dass sie etwas größer ist als die Schmalseite der Trägerplatte. Im Biegebereich des Lappens wird dieser erfindungsgemäß auf der Unterseite längs der auszubildenden Biegekante/n mit einer Nut versehen. Die Nutung wird bis auf eine Tiefe vorgenommen, dass die Beschichtungsschicht unabhängig von ihrer Dicke in diesem Bereich eine Restdicke von 0,1 bis 0,4 mm aufweist. Die Ausgestaltung der Nut kann jedwede brauchbare Form aufweisen. Die Nut kann beispielweise mit exakt ausgebildeten Kanten oder halbrund mit einem weichen Übergang in Form einer Abplattung ausgebildet sein. Die Breite der Nut entspricht in etwa dem Abstand zwischen den beiden Endpunkten der abgerundeten Biegekante der Trägerplatte.

Damit der überstehende Lappen eine ausreichende Stabilität behält, kann auf der restlichen Breite eine dickere Holzwerkstoffschicht der Trägerplatte stehen bleiben.

In einer besonderen Ausgestaltung nimmt die Dicke des überstehenden Lappens von der Nutung zu seinem Ende hin ab. In gleicher Weise nimmt die Länge der Trägerplatte von der Oberseite zur Unterseite zu. In einer anderen besonderen Ausgestaltung der Erfindung kann auf den Einsatz von Barrierepapieren verzichtet werden.

Die so in dem/den überstehenden Lappen geschaffene/n Nut/en wird jetzt mit einem Leim, vorzugsweise einem Polyamid-Schmelzkleber, gefüllt. Der thermoplastische Polyamidklebstoff füllt die im Radius entstehende Nut bzw. den Hohlraum zwischen Platte und Beschichtungslappen aus.

Auch die Trägerplatte wird im abgerundeten Bereich mit einem Leim, vorzugsweise Polyamid-Schmelzkleber, versehen, während der Rest des überstehenden Lappens mit einem kostengünstigen EVA-Schmelzkleber (Ethylen-Vinylacetat-Schmelzkleber) und/oder einem PUR-Schmelzkleber (Polyurethan-Schmelzkleber) versehen wird. Der feuchtigkeitsvernetzende reaktive Polyurethan-Schmelzkleber bewirkt eine sehr feste Verbindung zwischen Lappen und Trägerplatte.

Die Verwendung von verschiedenen Klebstoffen ermöglicht eine Optimierung des Klebstoffeinsatzes in Abhängigkeit von deren Eigenschaften und insbesondere der Kosten. Eine Verwendung eines PUR-Schmelzklebers im Radius ist im Vergleich eines Polyamidklebstoffes mit Schwierigkeiten verbunden.

In einer besonderen Ausgestaltung können die Außenkanten mit einem feuchtebeständigen Polyurethan-Kleber versehen werden.

Der so vorbereitete überstehende Lappen wird nun erwärmt und unter Anwendung von Druck bis zur Anlage an die Trägerplatte unter Ausbildung einer abgerundeten Ecke verformt. Der Druck wird so lange aufrechterhalten bis der Kleber genügend abgekühlt ist. Der über die Beschichtung der Unterseite überstehende Teil des Lappens wird abgeschnitten und verworfen.

Sollen die aufgebrachten Beschichtungspapiere auf den Holzwerkstoffplatten an mehr als einer Kante umgebogen werden, so ist an der/der Kante/n beider Schmalseiten und der Deckschicht von der Unterseite her mit Fräswerkzeugen das Material in notwendiger Breite abzutragen.

Die Erfindung ermöglicht das Herstellen von Verbundbau-platten aus Holzwerkstoffplatten unter Verwendung von dekorativen Beschichtungen zum Ausbilden von Verbundplatten mit abgerundeten Biegekanten der Holzwerkstoffplatten mit Außenradien im Bereich von 1,5 bis 6 mm.

Die dekorativen Verbundbauplatten können auch mit mehr als einer Biegekante für das jeweilige Endprodukt versehen sein. Dafür ist die entsprechende Anzahl, vorzugsweise zwei Nuten vorzusehen, die in Richtung der später herzustellenden Biegekanten verlaufen. Für die Herstellung von Verbundbauplatten in Gestalt von Paneelen werden die beschichteten Platten auf beiden Seiten soweit abgefräst, dass überstehende Lappen erhalten werden, die mit einer oder zwei zueinander parallel verlaufenden Nuten versehen werden können, wodurch Paneele mit kleinen abgerundeten Kanten herstellbar sind, die beim Herstellen von Wandverkleidungen kleine Sichtfugen aufweisen.

Die abgerundeten Kanten können an der Oberkante als auch an der Unterkante sowie an einer als auch an beiden Schmalseiten der Verbundbauplatte vorgesehen sein. Bei Verbundbauplatten geringer Dicke sind die abgerundeten Kanten zu einem Radius zusammengefasst. Es ist nur eine Nut entsprechender Breite notwendig. Bei dickeren Verbundplatten werden die Lappen mit zwei zueinander parallel verlaufenden Nuten versehen.

Die beschichteten Trägerplatten aus Holzwerkstoffen mit einem Biegeradius von 1,5 bis 6 mm können in der Möbelindustrie, für Küchenfronten, Wandverkleidungen, Tischarbeitsplatten, Fußbodenpaneelen und ähnlichen verwendet werden.

Die Erfindung soll nachfolgen an Hand der Zeichnungen näher erläutert werden.

Es zeigen:

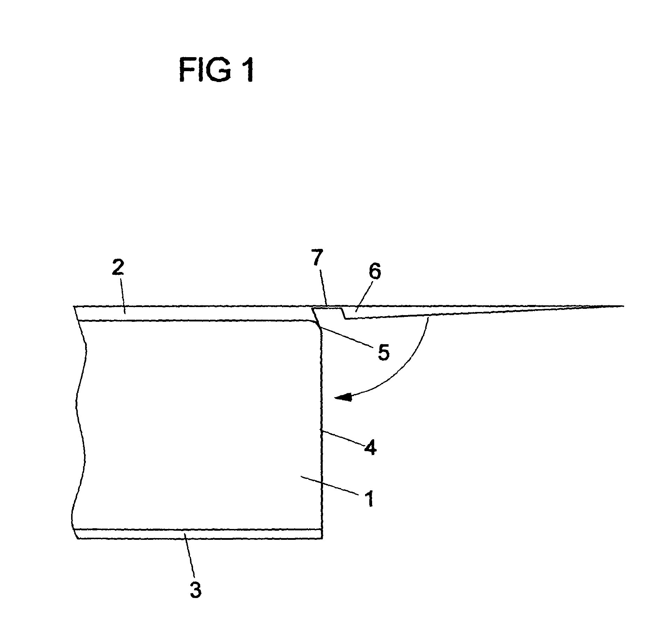

- Fig. 1:: den Kantenabschnitt einer DPL-beschichteten Trägerplatte mit einer Kantenrundung in Seitenansicht.
- Fig. 2 - Fig.7:: unterschiedliche Kantenrundungen bei DPL- beschichteten Trägerplatten in Seitenansicht.
- Fig. 8:: den Kantenabschnitt einer DPL-beschichteten Trägerplatte mit zwei Kantenrundungen und einem Lappen mit zwei halbrunden Nuten in Seitenansicht

Die Trägerplatte 1 weist eine obere Beschichtung 2 auf, die aus einer bestimmten Anzahl von mit Harzen getränkten Papierbahnen besteht. Die Harze der obersten Papierbahnen enthalten Füllstoffe, die der nach der Aushärtung entstehenden Schicht eine hohe Kratzfestigkeit und einen hohen Glanz verleihen.

Die darunter angeordnete Papierschicht ist mit Pigmenten gefüllten Harzen versehen oder besitzt einen Vielfarbenaufdruck. Darunter können weitere Papierbahnen als Barriereschicht vorgesehen sein, ebenso kann auf die Barriereschicht verzichtet werden. Auf der anderen Seite der Trägerplatte ist eine balance layer 3 vorgesehen. Nach dem Aufpressen der Beschichtung 2 wird die Trägerplatte 1 von der balance layer 3 her in einer Breite, die etwas größer ist als die Schmalseite 4 der Trägerplatte 1 bis auf eine Dicke, die in etwa der Dicke der Beschichtung 2 entspricht abgefräst. Dabei wird auch die Biegekante 5 der Schmalseite 4 der Trägerplatte 1 abgerundet.

In den beim Abfräsen stehenbleibenden Lappen 6 wird nun eine Nut 7 nahe der Biegekante 5 also im Biegebereich längs der Biegekante eingefräst. Die Tiefe der Nut 7 wird so gewählt, dass eine Restdicke von 0,1 bis 0,4 mm des Lappens 6 stehen bleibt. Die Breite der Nut 7 entspricht etwa dem Abstand zwischen den beiden Endpunkten der abgerundeten Biegekante 5 der Trägerplatte 1.

Nach dieser Vorbereitung wird der Lappen 6 samt Nut 7 mit einem Leim versehen, erwärmt und über die obere Biegekante 5 in Pfeilrichtung umgebogen und angepresst. Nach Abkühlung wird der über die untere balance layer 3 überstehende Teil des Lappens 6 abgeschnitten. Es werden Radien von 1,5 bis 6 mm erreicht.

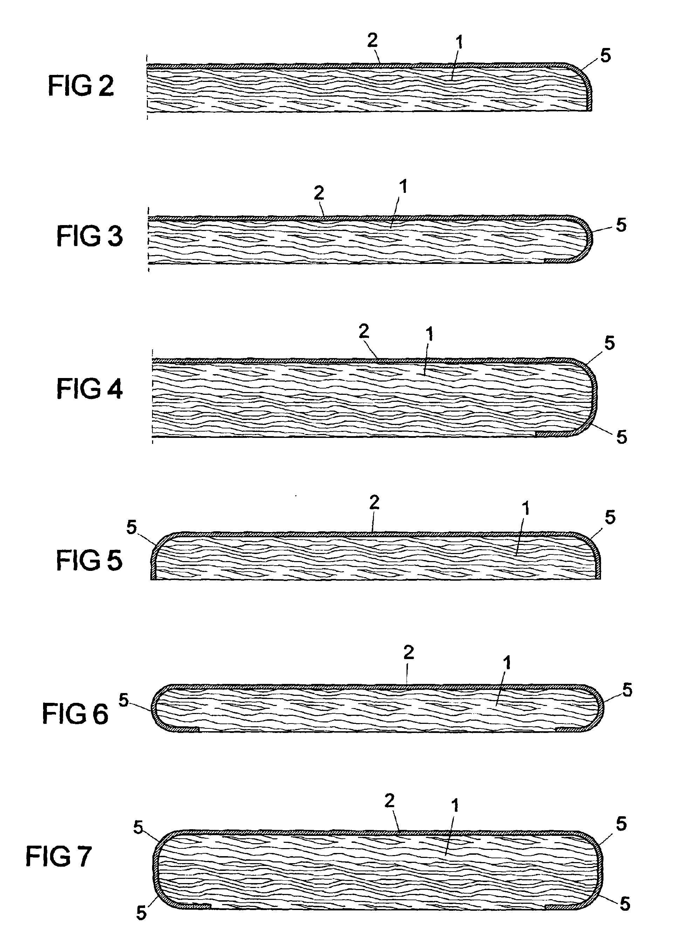

Man erhält eine Verbundbauplatte 1 wie sie in Figur 2 gezeigt wird.

Die Figuren 3 und 6 zeigen Verbundbauplatten 1, bei der die Beschichtung 2 über eine Biegekante 5 an einer bzw. beiden Schmalseiten 4 von der Deckseite bis auf die Unterseite geführt ist.

Die Figuren 4 und 7 zeigen Verbundbauplatten 1, bei denen die Beschichtung 2 an einer bzw. beiden Schmalseiten 4 mit jeweils zwei Biegekanten 5 versehen ist und von der Deckseite bis auf die Unterseite geführt ist.

Figur 5 zeigt eine Verbundbauplatte 1, bei der die Beschichtung 2 auf beiden Schmalseiten 4 über jeweils eine Biegekante 5 an der oberen Kante der Schmalseite 4 bis an die Unterseite geführt ist.

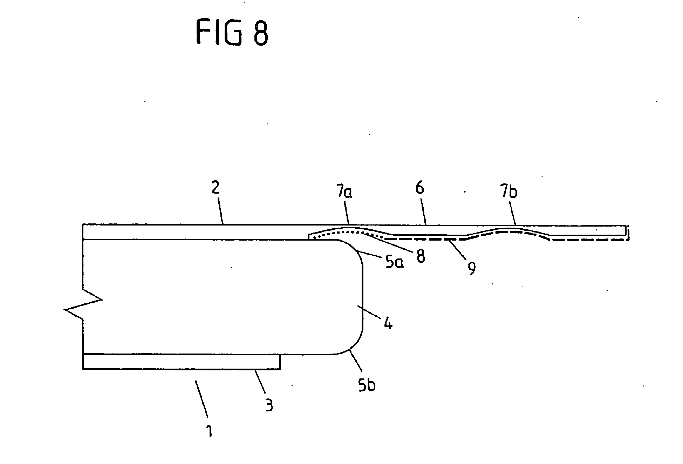

Figur 8 zeigt eine Trägerplatte 1 mit einer Oberseite und Unterseite, wobei auf der Oberseite eine obere Beschichtung 2 und auf der gegenüberliegenden Unterseite der Trägerplatte 1 eine balance layer 3 angeordnet sind. Wie vorgehend beschrieben, erfolgt mittels Abfräsen eine Abrundung der Biegekanten 5a,b an der Oberseite und Unterseite der Trägerplatte 1 und die Ausbildung eines überstehenden Lappens 6.

Nachfolgend werden in den Lappen 6 zwei parallele Nuten 7a,b eingefräst, die jeweils mit den zwei abgerundeten Biegekanten 5a, b korrespondieren.

Die in den Lappen 6 nachfolgend eingefrästen Nuten 7a,b sind halbrund ausgebildet, so dass ein weicher Übergang in Form einer Abplattung zwischen Nut 7 und dem restlichen Lappen 6 erfolgt.

In die erste Nut 7a, welche der Biegekante 5a an der Oberkante der Trägerplatte 1 gegenüberliegt, wird ein Polyamid-Schmelzkleber 8 eingebracht, während der Rest des Lappens 6 mit einem Polyurethan-Kleber 9 versehen wird.

Es ist aber auch möglich, dass beide Nuten 7a,b mit dem Polyamid-Schmelzkleber 8 gefüllt werden, während der Rest des Lappens 6 mit einem Polyurethan-Kleber versehen wird (nicht gezeigt).

## Patentansprüche

1. Verfahren zur Herstellung von mit Dekorpapieren direkt beschichteten Trägerplatten mit warm nachverformbaren Biegekanten,
wobei nach dem Beschichten der Trägerplatte (1) zum Erreichen von Biegeradien von 1,5 bis 6 mm diese von der Unterkante mindestens in der Breite der schmalen Seite (4) der Trägerplatte (1) bis auf etwa die Dicke der oberen Beschichtung (2) abgefräst, in den dabei erhaltenen Lappen (6) nahe der Biegekante (5) von der Unterseite längs der Biegekante (5) eine Nut (7) eingefräst wird, der so vorbereitete Lappen (6) beleimt, erwärmt und über die Biegekante (5) unter Druck umgebogen wird, wobei für das Ausfüllen der Nut (7) im Bereich des Radius zwischen Beschichtung (2) und der Trägerplatte (1) und für die Beleimung der Trägerplatte (1) im Bereich der Biegekante (5) ein Polyamid-Schmelzkleber und für den restlichen Teil des Lappens (6) ein EVA-Kleber und/oder PUR-Klebstoff eingesetzt werden

2. Verfahren nach Anspruch 1, **dadurch gekennzeichnet, dass** die Dicke der Beschichtungsschicht in der Nut (7) 0,1 bis 0,4 mm beträgt.

3. Verfahren nach mindestens einem der Ansprüche 1 bis 2, **dadurch gekennzeichnet, dass** bei mehr als einer Biegekante (5) die entsprechende Anzahl an parallelen Nuten (7) längs der Biegekanten (5) in den Lappen (6) eingefräst werden.

4. Direkt mit Dekorpapieren beschichtete Trägerplatte aus Holzwerkstoffen mit einer warm nachverformbaren Biegekante hergestellt mit einem Verfahren nach mindestens einem der Ansprüche 1 bis 3, **gekennzeichnet durch** auf der Unterseite der Deckschicht (2) längs auszubildender Biegekanten (5) ausgefräste Nuten (7).

5. Beschichtete Trägerplatte nach Anspruch 4, **dadurch gekennzeichnet, dass** der Lappen (6) aus Richtung der Schmalseite (4) der Trägerplatte (1) keilförmig ausgestaltet ist.

6. Beschichtete Trägerplatte nach Anspruch 4 und 5, **dadurch gekennzeichnet, dass** zum Ausbilden der Biegekante (5) unabhängig von der Dicke der beschichteten Trägerplatte (1) in der Nut (7) eine Restdicke von 0,1 bis 0,4 mm des Lappens (6) gegeben ist.

7. Beschichtete Trägerplatte nach mindestens einem der Ansprüche 4 bis 6, **dadurch gekennzeichnet**, die Breite der Nut (7) in etwa dem Abstand zwischen den Endpunkten der Rundung der Trägerplatte (1), beziehungsweise der Biegekante (5)entspricht.

8. Beschichtete Trägerplatte nach mindestens einem der Ansprüche 4 bis 7, **dadurch gekennzeichnet, dass** die Länge des Lappens (6) mindestens der Breite der Schmalseite (4) der Trägerplatte (1) entspricht.

9. Beschichtete Trägerplatte nach mindestens einem der Ansprüche 4 bis 8, **dadurch gekennzeichnet, dass** der beim Abfräsen der beschichteten Trägerplatte (1) entstehende Lappen (6) zur Stabilisierung an seiner Unterseite noch Holzreste aufweisen kann.

10. Beschichtete Trägerplatte nach mindestens einem der Ansprüche 4 bis 9, **dadurch gekennzeichnet, dass** gegenüber der Deckschicht (2) eine balance layer (3) an der Trägerplatte vorgesehen ist.

11. Beschichtete Trägerplatte nach mindestens einem der Ansprüche 4 bis 10, **dadurch gekennzeichnet, dass** die Deckschicht (2) mindestens eine eine transparente, kratzfeste, hochglänzende Oberfläche erzeugende mit Kunstharzen getränkte Papierbahn und mindestens eine eine einfarbige beziehungsweise mehrfarbige Oberfläche erzeugende mit Kunstharzen getränkte Papierbahn besitzt.

12. Beschichtete Trägerplatte nach Anspruch 11, **dadurch gekennzeichnet, dass** die Deckschicht (2) zusätzlich weitere mit Kunstharzen getränkte Papierbahnen als Barriereschicht aufweist.

## Claims

1. Method for manufacturing supporting plate coated directly with decorative paper with warm post-formable bending edges, wherein after coating the supporting plate (1) for obtaining bending radii of 1.5 to 6 mm said plate is milled off from the lower edge in at least the width of the small side (4) of the supporting plate (1) approximately to the thickness of the upper coating (2), wherein a slot (7) is milled into the cloth (6) obtained thereby close to the bending edge (5) from the lower side along the bending edge (5), wherein the such prepared cloth (6) is glued, is heated and is bent over the bending edge (5) under pressure, wherein a polyamide hot-melt glue is used for filling out the slot (7) in the area of the radius between the coating (2) and the supporting plate (1) and for the gluing of the supporting plate (1) in the area of the bending edge (5) and a EVA-glue and/or PUR-glue is used for the remaining part of the cloth (6).

2. Method according to claim 1, **characterized in that** the thickness of the coating layer in the slot (7) is 0.1 to 0.4 mm.

3. Method according to at least one of the claims 1 to 2, **characterized in that** in case of more than one bending edge (5) the corresponding number of parallel slots (7) are milled into the cloth (6) length-wise to the bending edges (5).

4. Supporting plate directly coated with decorative paper made of wooden material with a warm post-formable bending edge obtained by a method according to at least one of the claims 1 to 3 **characterized by** slots (7) milled out on the lower side of the coating layer (2) length-wise to bending edges (5) to be formed.

5. Coated supporting plate according to claim 4, **characterized in that** the cloth (6) is designed wedge-like from the direction of the small side (4) of the supporting plate (1).

6. Coated supporting plate according to claim 4 and 5, **characterized in that** for forming the bending edge (5) independently of the thickness of the coated supporting plate (1), a remaining thickness of 0.1 to 0.4 mm of the cloth (6) is provided in the slot (7).

7. Coated supporting plate according to at least one of the claims 4 to 6, **characterized in that** the width of the slot (7) corresponds approximately to the distance between the endpoints of the curvature of the supporting plate (1) or the bending edge (5).

8. Coated supporting plate according to at least one of the claims 4 to 7, **characterized in that** the length of the cloth (6) corresponds at least to the width of the small side (4) of the supporting plate (1).

9. Coated supporting plate according to at least one of the claims 4 to 8, **characterized in that** the cloth (6) obtained when milling off the coated supporting plate (1) can still have wood residuals on its lower side for stabilisation.

10. Coated supporting plate according to at least one of the claims 4 to 9, **characterized in that** a balance layer (3) is provided on the supporting plate opposite to the cover layer (2).

11. Coated supporting plate according to at least one of the claims 4 to 10, **characterized in that** the cover layer (2) has at least one paper wrap impregnated with synthetic resins producing a transparent scratch resistant glossy surface and at least one paper wrap impregnated with synthetic resin producing at least one single-coloured or multiple coloured surface.

12. Coated supporting plate according to claim 11, **characterized in that** the cover layer (2) comprises additionally further paper wraps impregnated with synthetic resins as barrier layer.

## Revendications

1. Procédé de fabrication de plaques de support revêtues directement de papiers décoratifs, dotées de bords de pliage redéformables à chaud,
sachant qu'après le revêtement de la plaque de support (1) pour atteindre des rayons de pliage compris entre 1,5 et 6 mm, celle-ci est fraisée par le bord inférieur au moins dans la largeur du petit côté (4) de la plaque de support (1) jusqu'à environ l'épaisseur du revêtement supérieur (2), une rainure (7) est fraisée dans la languette (6) obtenue près du bord de pliage (5) par le côté inférieur le long du bord de pliage (5), la languette ainsi préparée (6) est collée, chauffée et repliée sous pression sur le bord de pliage (5), sachant que pour remplir la rainure (7) dans la zone du rayon entre le revêtement (2) et la plaque de support (1) et pour coller la plaque de support (1) dans la zone du bord de pliage (5) est utilisée une colle fusible pour polyamide et pour la partie restante de la languette (6) une colle pour EVA et/ou une colle pour PUR.

2. Procédé selon la revendication 1, **caractérisé en ce que** l'épaisseur de la couche de revêtement dans la rainure (7) est comprise entre 0,1 et 0,4 mm.

3. Procédé selon au moins l'une quelconque des revendications 1 à 2, **caractérisé en ce qu'**en cas de plus d'un bord de pliage (5), le nombre correspondant de rainures parallèles (7) est fraisé le long des bords de pliage (5) dans la languette (6).

4. Plaque de support en matériau dérivé du bois revêtue directement de papiers décoratifs, dotée d'un bord de pliage redéformable à chaud et fabriquée avec un procédé selon au moins l'une quelconque des revendications 1 à 3, **caractérisée par** des rainures (7) fraisées sur le côté inférieur de la couche de revêtement (2) le long de bords de pliage (5) à réaliser.

5. Plaque de support revêtue selon la revendication 4, **caractérisée en ce que** la languette (6) est configurée en forme de coin en partant du petit côté (4) de la plaque de support (1).

6. Plaque de support revêtue selon la revendication 4 ou 5, **caractérisée en ce que** pour réaliser le bord de pliage (5) indépendamment de l'épaisseur de la plaque de support (1) revêtue dans la rainure (7), une épaisseur résiduelle de la languette (6) est comprise entre 0,1 et 0,4 mm.

7. Plaque de support revêtue selon au moins l'une quelconque des revendications 4 à 6, **caractérisée en ce que** la largeur de la rainure (7) correspond à peu près à la distance entre les points d'extrémité de l'arrondi de la plaque de support (1) ou du bord de pliage (5).

8. Plaque de support revêtue selon au moins l'une quelconque des revendications 4 à 7, **caractérisée en ce que** la longueur de la languette (6) correspond au moins à la largeur du petit côté (4) de la plaque de support (1).

9. Plaque de support revêtue selon au moins l'une quelconque des revendications 4 à 8, **caractérisée en ce que** la languette (6) apparue lors du fraisage de la plaque de support (1) revêtue pour la stabilisation sur son côté inférieur peut encore présenter des restes de bois.

10. Plaque de support revêtue selon au moins l'une quelconque des revendications 4 à 9, **caractérisée en ce qu'**une couche d'équilibrage (3) est prévue sur la plaque de support en face de la couche de recouvrement (2).

11. Plaque de support revêtue selon au moins l'une quelconque des revendications 4 à 10, **caractérisée en ce que** la couche de recouvrement (2) possède au moins une bande de papier imprégnée de résines synthétiques générant une surface transparente, très brillante, résistante à l'abrasion, et au moins une bande de papier imprégnée de résines synthétiques générant une surface polychrome ou monochrome.

12. Plaque de support revêtue selon la revendication 11, **caractérisée en ce que** la couche de recouvrement (2) présente en outre d'autres bandes de papier imprégnées de résines synthétiques comme couche barrière.
